# EUROPÄISCHE PATENTSCHRIFT

(11) **EP 0 599 904 B1**
(45) Veröffentlichungstag und Bekanntmachung des Hinweises auf die Patenterteilung: **03.05.1995**
(21) Anmeldenummer: 92917077.7
(22) Anmeldetag: 10.08.1992
(51) Int. Cl.: A23G 9/28, A47J 43/28

(54) **PORTIONIERER FÜR LEBENSMITTEL**
FOOD-SERVING SCOOP
DISTRIBUTEUR DE PORTIONS DE PRODUITS ALIMENTAIRES

(30) Priorität: 10.08.1991 DE 4126560
(43) Veröffentlichungstag der Anmeldung: 08.06.1994
(73) Patentinhaber: SCHÜLLING, Christof, D-97522 Sand (DE)
(72) Erfinder: SCHÜLLING, Christof, D-97522 Sand (DE)
(74) Vertreter: Pöhner, Wilfried Anton, Dr.
(86) Internationale Anmeldenummer: DE9200667
(87) Internationale Veröffentlichungsnummer: WO9302568

(56) Entgegenhaltungen:
- EP-A- 0 189 162
- DE-C- 712 862
- DE-U- 8 515 384
- DE-U- 8 711 544
- FR-A- 2 425 833

## Beschreibung

Die Erfindung bezieht sich auf einen Portionierer für Lebensmittel, insbesondere für Speiseeis, mit einem zylindrischen Griff und einem daran befestigten Löffel, in dem innenseitig in geringem Abstand ein Messer um die Achse des Griffes verschwenkbar befestigt ist, wobei an der Stirnseite des Griffs über einen Arm der Löffel angebracht ist und das Messer mit der Welle eines im Griff angeordneten Antriebes in Verbindung steht.

Aus der DE-U-8515384 ist ein Portionierer gattungsmäßiger Art bekannt, bei dem ein Elektromotor einen auf der Innenseite eines Löffels angeordneten Schaber nach dem Niederdrücken eines Betätigungsknopfes zur Herstellung einer Speiseeiskugel um seine Achse verschwenkt. Der Löffel ist an einem koaxialen, zylindrischen Griff befestigt, in dem der Motor, Batterien, ein zum Antrieb des Schabers dienendes Getriebe, sowie der Betätigungsknopf angebracht sind.

In der EP-A 01 89 162 ist ebenfalls ein Portionierer für Speiseeis beschrieben, der aus einem Griff mit einem stirnseitig befestigten Löffel sowie einem darin schwenkbar angeordneten Schaber aufgebaut ist. Das Niederdrücken eines am Griff positionierten Betätigungsknopfes hat ein durch einen Elektromotor oder einen Hydraulikantrieb bedingtes verschwenken des Schabers und damit ein Lösen der Speiseeiskugel aus dem Löffel zum Ergebnis. Die zum Antrieb des Schabers dienenden Elemente sind ebenfalls im Griff angeordnet.

Bei den bekannten, mit einem eigenen Antrieb versehenen Portionierern für Lebensmittel, wie Speiseeis, Kartoffelpüree, Desserts, Mousse au Chocolat, Sahnecremes odgl. ist als nachteilig anzusehen, daß es für den Geschäftsinhaber prinzipiell undenkbar ist, die Anzahl der durch seine Mitarbeiter ausgegebenen Portionen objektiv zu ermitteln. Vielmehr ist er auf die Angaben seiner Mitarbeiter angewiesen und außerstande, festzustellen, ob nicht doch ein Teil des Umsatzes "in die eigene Tasche" gewirtschaftet wurde.

Hiervon ausgehend hat sich die Erfindung die Weiterentwicklung von Portionierern gattungsmäßiger Art dahingehend zu Aufgabe gemacht, daß die Anzahl der tatsächlich erfaßten Portionen fehlerfrei erfaßt wird.

Gelöst wird diese Aufgabe erfindungsgemäß dadurch, daß ein elektrisches Zählwerk die Betätigungen des Messers zählt, die nicht in einem unter einer vorgegebenen Schranke liegenden zeitlichen Intervall liegen, wobei das Intervall beim Betätigen des Messers von neuem zu laufen beginnt.

Der Kerngedanke der Erfindung besteht darin, die durch den Portionierer ausgegebenen Portionen zu zählen, wobei zur Vermeidung von Fehlzählungen und insbesondere Doppelzählungen ein Zeitschalter zusätzlich vorgesehen ist, der sicherstellt, daß bei aufeinanderfolgenden Zählimpulsen in einem solchen kurzen zeitlichen Abstand, in dem ein erneutes Füllen des Löffels und eine Abgabe der Portion nicht möglich ist, eine Zählung unterdrückt wird. Es soll sichergestellt werden, daß nicht bei mehrfachen Betätigungen bei (nahezu) leerem Löffel ein Zählimpuls erzeugt wird. Gleichermaßen sollen Doppelzählungen unterdrückt werden, wenn bei erstmaliger Betätigung des Messers das Eis nicht aus dem Löffel abgelöst wurde und ein nochmaliges Aktivieren kurz darauffolgend erforderlich wird.

Als bevorzugt ist anzusehen, für den Antrieb einen Elektromotor, insbesondere Gleichstrommotor einzusetzen. Obwohl grundsätzlich denkbar ist, die Energieversorgung über ein Kabel vorzunehmen, empfiehlt sich zur Energieeinspeisung eine Batterie oder einen wiederaufladbaren Akku unmittelbar im Griff anzuordnen, um weitgehende Bewegungsfreiheit und räumliche Unabhängigkeit - allerdings auf Kosten einer Gewichtserhöhung - zu erreichen.

Im Rahmen der Erfindung steht grundsätzlich frei, auf welche Art und Weise die Schwenkbewegung des Messers erzeugt wird. Eine Möglichkeit besteht in der Verwendung eines Getriebes, welches trotz voller Umdrehungen des Motors eine Übersetzung in eine oszillatorische Bewegung um 180° Grad vornimmt. Im Hinblick auf den Aufwand zweckmäßiger und demzufolge empfehlenswert ist, die Bewegung des Messers über ein Hin- und Herschwenken des Motors selbst zu erzeugen.

In spezieller Ausgestaltung wird ein Antrieb vorgeschlagen, bei der die Steuerung über zwei Lichtschranken erfolgt, die in der Ausgangs- und in der Endposition der Messerbewegung angeordnet sind. Die Funktion ist wie folgt:
Durch Aktivieren des Betätigungsschalters wird der Gleichstrommotor angeschaltet und das Messer bewegt. Mit Erreichen der mit Hilfe der Lichtschranke ermittelten Endposition erfolgt ein Umschalten der Antriebswelle, d.h. zunächst ein Abbremsen und ein Umpolen, so daß der Motor und durch Vermittlung der Welle auch das Messer in seine Ausgangsstellung zurückkehrt. Ebenfalls über die Lichtschranke festgestellt wird das Erreichen der Ausgangsposition, wo ein Abbremsen erfolgt und im Regelfall die gesamte Elektronik in eine Standby-Funktion überführt wird, obwohl prinzipiell auch ein Abschalten des gesamten Antriebes denkbar ist. Eingehende Überlegungen zeigen jedoch, daß ein völliges Abschalten von Motor und Steuerung nach jeder Betätigung unter mehreren Gesichtspunkten nachteilig ist.

Die nunmehr vorgeschlagene Lösung ist im Hinblick auf Antrieb und zugehöriger Steuerung besonders von Vorteil, da sie die Verwendung eines über Batterie versorgten Gleichstrommotors gestattet und die Steuerung selbst vollelektronisch, d.h. verschleiß- und wartungsfrei und damit mit hoher Betriebssicherheit erfolgt.

Im praktischen Einsatz ist es in Abhängigkeit von der jeweils zu portionierenden Speise von Vorteil, die Portionsgröße unterschiedlich zu wählen und zu variieren. Aus diesem Grunde ist die Austauschbarkeit von Löffeln von Vorteil. Er wird, beispielsweise mit Hilfe eines Mehrkantes, auf die Welle aufgesteckt und über eine Inbusschraube fixiert.

Ein eigenständiger Austausch des Messers, der in der Realisierung vergleichbar dem des Löffels ist, ist von Vorteil, da es sich um ein im Vergleich zu den übrigen Bauelementen hoch verschleißendes und deshalb bald zu ersetzendes Teil handelt.

In einem Ausführungsbeispiel ist vorgesehen, den Betätigungsknopf im vorderen, d.h. im löffelnahen Bereich des Griffes zu positionieren. In diesem Fall ist dessen Aktivierung allein über den Daumen, d.h. bei geringsten Belastungen und unter Beibehaltung der Position der übrigen Hand möglich.

In einer besonders bevorzugten Ausführungsform ist vorgesehen, daß das Zählwerk nur zählt, wenn das Messers belastet ist, d. h. wenn der Löffel mit Speiseeis oder ählichem gefüllt ist. Damit ist eine zusätzliche Sicherheit gegen Fehlzählungen gegeben, da unbeabsichtigte oder aus Reinigungszwecken vorgenommene Betätigungen des Messers nicht gezählt werden. Es stellt keine prinzipiellen Schwierigkeiten dar, anhand der bei Betätigen des Messers jeweils auftretenden kräftemäßigen Belastungen, die sich in unterschiedlicher Größe und zeitabhängigem Verhalten der Strom- und Spannungswerte äußert, festzustellen, ob die Betätigung des Messers gegen Widerstand, d.h. bei gefülltem Löffel oder ohne Widerstand, d.h. bei leerem Löffel erfolgt. Nur das Zählen der ersteren gibt die Zahl der ausgegebenen Portionen wieder.

Als weitere Maßnahme zur Vermeidung von Fehlzählungen wird der Hell-/Dunkelwechsel bei der Aufnahme des zu portionierenden Gutes innerhalb des Löffels zur Aufgabe gemacht. Zu diesem Zweck wird dort ein optischer Sensor, bei dem es sich beispielsweise um einen Infrarot-Meßsensor handelt, angebracht und der bei Aufnahme der Ware erfolgende Hell-/Dunkelwechsel erfaßt. Ein Zählimpuls wird einzig dann ausgelöst, wenn eine zeitliche Koinzidenz mit einem Betätigungsvorgang des Messers gegeben ist, wie sie aufgrund entsprechender Leistungsaufnahme der Elektronik erfaßt werden kann.

Zum Ablesen der aufsummierten Zählimpulse sind zwei Möglichkeiten bevorzugt:
Im ersten Fall wird durch eine der üblichen Anzeigen innerhalb des Griffes sofort und auch durch den Mitarbeiter direkt die abgegebene Menge an Portionen ablesbar. In einer Alternativen wird auf dem Griff vorübergehend ein Abfragegerät durch Aufstecken oder Aufschrauben angebracht und hierbei die Zählimpulse übernommen bzw. angezeigt. In einem solchen Fall läßt sich verhindern, daß die Bedienungsperson unmittelbar die Zählimpulse ablesen kann. Versuche zum Überlisten des Zählwerkes müssen dann mangels Möglichkeit der Überprüfung und Kontrolle durch die Bedienungsperson unterbleiben.

In einer besonders bevorzugten Weiterbildung ist eine Portioniererauflage vorgesehen, in welche der Portionierer während Pausen abgelegt werden kann und wo, ausgelöst z.B. durch das Gewicht des Portionierers im abgelegten Zustand eine Spüle eingeschaltet wird, die Wasser zu Reinigungszwecken gegen den Löffel sprüht. Man erhält einen Reinigungsvorgang, der in gewisser Weise vergleichbar mit den aus der Gastronomie bekannten Glasspülern ist. Dort wird durch das Aufschieben des Glases - und nicht durch das Gewicht - ein Sprühen des Waschwassers an den Innenboden des Glases bewirkt. Der entscheidende Vorteil bei Portionierern ist darin zu sehen, daß im Gegensatz zu den bisher mechanisch betätigten Portionierern keine Betätigung des Messers zu Reinigungszwecken erforderlich ist. Die Folge ist eine längere Betriebsdauer bis zum erforderlichen Austausch von Batterie oder Akku oder ganz allgemein ein Einsparen von Energie.

Zum Ein- und Ausschalten des Reinigungs- und Waschvorganges wird ein in vertikaler Richtung bewegbarer Auflageknopf vorgesehen, auf den der Löffel mit gezwungenermaßen nach unten offener Halbschale aufgelegt wird. Durch die unter Einwirkung der Schwerkraft erfolgende Bewegung des Auflageknopfes wird ein Ventil geöffnet und das Waschwasser in Richtung auf Düsen freigegeben, die sich in der Nähe des Auflageknopfes befinden und auf den Löffel zu gerichtet sind. Der hierdurch erreichbare Vorteil ist, daß nur bei aufgelegtem Löffel die Beaufschlagung mit Wasser erfolgt und andernfalls durch Schließen des Ventiles unterbleibt. Die Vergeudung von Wasser ist auch aufgrund der der Beaufschlagung dienenden Düsen, die eine geringe Kraftwirkung, jedoch eine starke Spülwirkung aufgrund des Düseneffektes bewirken, mit Sicherheit ausgeschlossen. Zudem wird die vornehmlich zu reinigende Innenfläche des Löffels überwiegend beaufschlagt. Durch das Besprühen mit frischem Leitungswasser erreicht man den in hygienischer Hinsicht entscheidenden Vorteil, daß das Entstehen oder Ausbilden von Bakterienkulturen weitgehendst vermieden wird.

Zu Beginn des nächsten Portioniervorganges, also nach Beendigung des Spülprozesses befinden sich im Bereich des Löffels häufig Reste des Waschwassers, das durch Abstreifen auf einer schwammförmigen Unterlage entfernt wird. Unter hygienischen Gesichtspunkten ist diese Vorgehensweise abzulehnen, da sich in der feuchten schwammartigen Unterlage mit besonderer Vorliebe und in erheblichem Umfange während des Abwischvorganges auf den Löffel sich übertragende Bakterienkulturen ausbilden können.

Hier wird nun vorgeschlagen, auf dem Rande der Portioniererspüle eine aus elastischem Material bestehende Klopfkante anzubringen. Der Benutzer kann dann vor dem Erfassen des zu portionierenden Gutes das daran noch anhaftende Waschwasser durch leichtes Anklopfen des Löffels an der Klopfkante ins Innere der Portioniererspüle zum Abtropfen bringen.

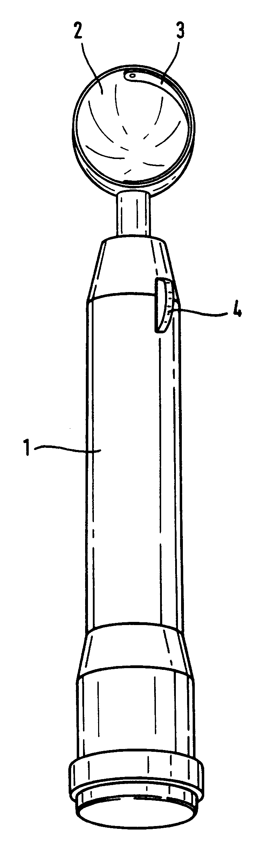

## Patentansprüche

1. Portionierer für Lebensmittel, insbesondere für Speiseeis, mit einem zylindrischen Griff (1) und einem daran befestigten Löffel (2), in dem innenseitig in geringem Abstand ein Messer (3) um die Achse des Griffes (1) verschwenkbar befestigt ist, wobei an der Stirnseite des Griffs (1) über einen Arm der Löffel (2) angebracht ist und das Messer (3) mit der Welle eines im Griff (1) angeordneten Antriebes in Verbindung steht, **dadurch gekennzeichnet,** daß ein elektrisches Zählwerk die Betätigungen des Messers (3) zählt, die nicht in einem unter einer vorgegebenen Schranke liegenden zeitlichen Intervall liegen, wobei das Intervall beim Betätigen des Messers von neuem zu laufen beginnt.

2. Portionierer nach Anspruch 1, **gekennzeichnet durch** einen Elektromotor, insbesondere Gleichstrommotor als Antrieb, der einen Betätigungsknopf (4) aufweist.

3. Portionierer nach Anspruch 2, **dadurch gekennzeichnet**, daß im Griff (1) eine Batterie und/oder ein Akku untergebracht ist.

4. Portionierer nach einem der Ansprüche 2 oder 3, **dadurch gekennzeichnet**, daß der Motor eine Hin- und Herschwenkbewegung vollführt.

5. Portionierer nach Anspruch 4, **dadurch gekennzeichnet**, daß im Ausgangs- und Endpunkt der Bewegung des Messers (3) eine Lichtschranke angeordnet ist, die bei Erreichen des maximalen Drehwinkels die Antriebswelle abbremst und umpolt und bei Erreichen der Ausgangsposition die Antriebswelle abbremst und abschaltet bzw. in den Standby-Betrieb übergeht.

6. Portionierer nach einem der Ansprüche 1 bis 5, **gekennzeichnet durch** austauschbare Anbringung von Löffeln (2) beliebiger Durchmesser.

7. Portionierer nach einem der Ansprüche 1 bis 6, **gekennzeichnet durch** die lösbare Befestigung und Austauschbarkeit des Messers (3).

8. Portionierer nach einem der Ansprüche 2 bis 7, **dadurch gekennzeichnet**, daß im vorderen Bereich des Griffes (1) der Betätigungsknopf (4) angeordnet ist.

9. Portionierer nach einem der Ansprüche 1 bis 8, **dadurch gekennzeichnet**, daß die Betätigungen des Messers (3) nur gezählt werden, wenn es belastet ist.

10. Portionierer nach einem der Ansprüche 1 bis 9, **dadurch gekennzeichnet**, daß die Betätigungen des Messeres (3) nur gezählt werden, wenn bei zeitlicher Koninzidenz mit der Betätigung ein im Löffel (2) befindlicher optischer Sensor (insbesondere ein IR-Meßsensor), einen Hell-/Dunkelwechsel erfaßt.

11. Portionierer nach einem der Ansprüche 1 bis 10, **dadurch gekennzeichnet**, daß sich im Griff (1) eine Anzeige für die Zählimpulse befindet.

12. Portionierer nach einem der Ansprüche 1 bis 11, **dadurch gekennzeichnet**, daß im Griff (1) ein Stekker für ein aufsteck- oder aufschraubbares Abfragegerät angebracht ist.

13. Portionierer nach einem der Ansprüche 1 bis 12, **gekennzeichnet durch** eine Portioniererspüle, die im aufgelegten Zustand den Löffel (2) besprüht.

14. Portionierer nach Anspruch 13, **dadurch gekennzeichnet**, daß ein in vertikaler Richtung bewegbarer Auflageknopf angebracht ist, der bei Auflegen des Löffels (2) ein Ventil öffnet und in der Nähe des Auflageknopfes befindliche und auf den Löffel (2) zu gerichtete Düsen beaufschlagt.

15. Portionierer nach Anspruch 13 oder 14, **dadurch gekennzeichnet**, daß am Rand der Portioniererspüle eine aus elastischem Material bestehende Klopfkante angebracht ist.

## Claims

1. Food-serving scoop, especially for ice cream, having a cylindrical handle (1) and, fixed to the handle, a spoon (2) in the interior of which a blade (3) is fixed so that it can pivot about the axis of the handle (1) close to the inside surface of the spoon, whereby the spoon (2) is attached to the end of the handle (1) via a rod, and the blade (3) is connected to the shaft of an actuator which is disposed in the handle (1), **wherein** an electrical counter counts the operations of the blade (3) which do not lie in a temporal interval below a specified limit, whereby the interval recommences when the blade is actuated.

2. Food-serving scoop according to claim 1, **wherein** there is an electric motor, especially a direct current motor, which has a control button (4).

3. Food-serving scoop according to claim 2, **wherein** a battery and/or an accumulator is disposed in said handle (1).

4. Food-serving scoop according to one of claims 2 or 3, **wherein** said motor swivels back and forth.

5. Food-serving scoop according to claim 4, **wherein** a photoelectric barrier is disposed at the starting and end point of the movement of said blade (3), which, when the maximum angle of rotation is reached, brakes and changes the poles of the drive shaft and, when the starting position is reached, brakes and switches the drive shaft off or it is transferred to a standby state.

6. Food-serving scoop according to one of claims 1 to 5, **wherein** spoons (2), of optional diameter, are attached in such a way that they are replaceable.

7. Food-serving scoop according to one of claims 1 to 6, **wherein** said blade (3) is replaceable and fastened in such a way that is releasable.

8. Food-serving scoop according to one of claims 1 to 7, **wherein** said control button (4) is disposed at the front region of said handle (1).

9. Food-serving scoop according to one of claims 1 to 8, **wherein** the activations of said blade (3) are only counted when it is loaded.

10. Food-serving scoop according to one of claims 1 to 9, **wherein** the activations of said blade (3) are only counted, if, in temporal coincidence with said activation, an optical sensor (especially a IR measuring sensor) disposed in said spoon (2) records a change between light and dark.

11. Food-serving scoop according to one of claims 1 to 10, **wherein** a display for the count impulses is disposed in said handle (1).

12. Food-serving scoop according to one of claims 1 to 11, **wherein** a connector for a detachable or screw fastened interrogation unit is disposed in said handle (1).

13. Food-serving scoop according to one of claims 1 to 12, **wherein** a scoop washer sprays said spoon (2) when it is laid thereupon.

14. Food-serving scoop according to claim 13, **wherein** a seating button, which can be moved in a vertical direction, is disposed which opens a valve when said spoon (2) is laid thereupon, and impinges nozzles which are located proximate to said seating button and are directed towards said spoon (2).

15. Food-serving scoop according to claim 13 or 14, **wherein** at the edge of said scoop washer a knocking rim is disposed which consists of an elastic material.

## Revendications

1. Ustensile à préportionner pour aliments, en particulier pour de la crème glacée, comprenant un manche cylindrique (1) auquel est fixée une cuillère (2), à l'intérieur de laquelle et à faible intervalle de sa surface un couteau (3) est monté pivotant autour le l'axe du manche (1), la cuillère (2) étant disposée à la partie antérieure du manche (1) par l'intermédiaire d'un bras, et le couteau (3) étant relié à la tige d'un actionneur situé dans le manche (1), **caractérisé en ce qu**'un dispositif de comptage électrique compte le nombre d'actionnements du couteau (3), qui n'interviennent pas dans un intervalle de temps inférieur à une valeur limite prédéterminée, l'intervalle de temps étant réinitialisé après chaque actionnement du couteau.

2. Ustensile à préportionner selon la revendication 1, **caractérisé par** un moteur électrique, en particulier un moteur à courant continu, comme entraînement, qui comporte un bouton d'actionnement (4).

3. Ustensile à préportionner selon la revendication 2, **caractérisé en ce qu**'une batterie et/ou un accumulateur est disposée dans le manche (1).

4. Ustensile à préportionner selon l'une des revendications 2 ou 3, **caractérisé en ce que** le moteur décrit un mouvement de pivotement en va-et-vient.

5. Ustensile à préportionner selon la revendication 4, **caractérisé en ce qu**'une barrière lumineuse est disposée aux point de départ et de fin du mouvement du couteau (3), qui provoque un freinage et un changement de polarité lorsque l'angle maximal de rotation de la tige est atteint, et qui provoque un freinage de la tige d'entraînement et une désactivation ou une mise en fonctionnement d'attente (standby) lorsque la position de départ est atteinte.

6. Ustensile à préportionner selon l'une des revendications 1 à 5, **caractérisé par** la mise en place interchangeable de cuillères (2) de diamètres quelconques.

7. Ustensile à préportionner selon l'une des revendications 1 à 6, **caractérisé par** la fixation détachable et l'interchangeabilité du couteau (3).

8. Ustensile à préportionner selon l'une des revendications 2 à 7, **caractérisé en ce qu**'un bouton d'actionnement (4) est situé à la partie antérieure du manche (1).

9. Ustensile à préportionner selon l'une des revendications 1 à 8, **caractérisé en ce que** les actionnements du couteau (3) ne sont comptabilisés que lorsque ce dernier est chargé.

10. Ustensile à préportionner selon l'une des revendications 1 à 9, **caractérisé en ce que** les actionnements du couteau (3) ne sont comptabilisés que lorsque l'instant de l'actionnement coïncide avec la détection d'une alternance clair/sombre par un capteur optique (en particulier un capteur infra-rouge) situé dans la cuillère (2).

11. Ustensile à préportionner selon l'une des revendications 1 à 10, **caractérisé en ce qu**'un affichage pour les impulsions de comptage est situé dans le manche (1).

12. Ustensile à préportionner selon l'une des revendications 1 à 11, **caractérisé en ce qu**'une prise pour un appareil de lecture qui peut y être enclenché ou vissé est disposée dans le manche (1).

13. Ustensile à préportionner selon l'une des revendications 1 à 12, **caractérisé par** un support de rinçage, qui arrose la cuillère (2) lorsqu'elle y est déposée.

14. Ustensile à préportionner selon la revendication 13, **caractérisé en ce qu**'un interrupteur-support est prévu, qui est déplaçable verticalement et qui, lorsque la cuillère (2) est déposée, ouvre une soupape et alimente des buses disposées au voisinage de l'interrupteur-support et orientées vers la cuillère (2).

15. Ustensile à préportionner selon la revendication 13 ou 14, **caractérisé en ce qu**'une arête de frappe en matériau élastique est disposée autour du support de rinçage de l'ustensile à préportionner.
